# EUROPEAN PATENT SPECIFICATION

(11) **EP 3 334 128 B1**
(45) Date of publication and mention of the grant of the patent: **09.11.2022**
(21) Application number: 17162468.7
(22) Date of filing: 23.03.2017
(51) Int. Cl.: H04L 61/3015, H04L 9/40, G06F 21/55

(54) **A METHOD FOR AUTOMATIC DETERMINING AT TIME OF REGISTRATION WHETHER A DOMAIN NAME REGISTRATION IS LIKELY TO BE INTENDED FOR USE FOR MALICIOUS ACTIVITY OR NOT**
VERFAHREN ZUR AUTOMATISCHEN BESTIMMUNG DER WAHRSCHEINLICHKEIT ZUM ZEITPUNKT DER REGISTRIERUNG, OB EINE DOMAINREGISTRIERUNG ZUR VERWENDUNG FÜR BÖSARTIGE AKTIVITÄTEN BEABSICHTIGT IST ODER NICHT
PROCÉDÉ PERMETTANT DE DÉTERMINER AUTOMATIQUEMENT AU MOMENT DE L'ENREGISTREMENT SI UN ENREGISTREMENT DE NOM DE DOMAINE EST SUSCEPTIBLE D'ÊTRE UTILISÉ POUR UNE ACTIVITÉ MALVEILLANTE OU NON

(30) Priority: 09.12.2016 EP 16203152
(43) Date of publication of application: 13.06.2018
(73) Proprietor: EURid vzw, 1831 Diegem (BE)
(72) Inventor: Desmet, Lieven, 3020 Herent (BE); Vissers, Thomas, 2018 Antwerpen (BE); Agten, Pieter, 3940 Hechtel-Eksel (BE); Spooren, Jan, 2900 Schoten (BE); Van Wesemael, Marc, 1831 Diegem (BE)
(74) Representative: Arnold & Siedsma

(56) References cited:
- US-A1- 2006 080 437
- US-A1- 2010 319 069
- US-A1- 2013 174 254
- US-A1- 2016 065 597
- US-A1- 2017 041 333

## Description

### FIELD OF THE INVENTION

The invention relates to methods for automatic determining at time of registration whether a domain name registration is likely to be intended for use for malicious activity or not, methods for tuning (training) said methods and use of said methods by a registry and/or blacklisting services and software related thereto.

This invention provides a solution to the need to detect and thwart malicious domain registrations before the domain even becomes operational. The invention provides methods to enable engagement of the parties preoccupied with the registration procedure itself, as stopping a domain name at registration time requires engagement thereof, in particular the registries that are involved in the registration process of all domain names they manage. As such, they are capable of taking action at an early stage. Moreover, as a (thick) registry has access to the relevant registration data of all its domain registrations, across registrars and registrants, the invention makes use of such data, more in particular provides a particular data analysis for use in the above described methods.

### BACKGROUND TO THE INVENTION

The Domain Name System (DNS) and domain names itself form a key cornerstone of the Internet's operation. Virtually all communication on the web requires the resolution of domain names to IP addresses. Malicious activities are no exception, and attackers constantly depend upon functioning domain names to execute their abusive operations.

Consequently, blocking attacker-controlled domain names is an effective strategy to limit criminal activities. This is commonly achieved through domain blacklisting. Domain names are typically placed on blacklists (DNSBLs) when abusive activities have been reported using that domain name, such as phishing or spam. In the case of spam blacklists, email receiving entities constantly query these services and then reject email messages when they originate from a blacklisted domain.

Other DNSBLs, such as Malware Domain List, list domains used for malware spreading and for botnet command and control servers. Botmasters deploy domain generation algorithms (DGAs) to frequently switch to new C&C domain names. This prevents domain takedowns from effectively disrupting their operation. When a botnet's DGA is reverse-engineered, future C&C domains are known in advance and these can thus be timely blacklisted. However, attackers are adopting non-deterministic algorithms that use, for instance, trending Twitter topics as a seed for their DGA. This prevents preemptive C&C domain registration or blacklisting.

Essentially, apart from DGA generated entries, DNSBLs only stop malicious domains after criminal activities have already taken place. Moreover, due to the limited cost of registering a domain name, cyber criminals abandon and move on to new domains at a very high rate. Furthermore, attackers switch between many registrars and resellers to further obscure their actions. These hit-and-run strategies allow attackers to effectively circumvent their operations from being interrupted by blacklists.

Document US 2016/065597 A1 discloses a method for domain name scoring, which includes receiving a request to provide a reputation score for a domain name, calculating the reputation score of the domain name by finding a similarity with one of domain name clusters in a database. The reputation score indicates a probability that the given domain name is malicious.

### SUMMARY OF THE INVENTION

The invention is defined in the independent claims. Further embodiments are defined in the dependent claims.

This invention provides (automated) methods to determine malicious domain registrations before the domain even becomes operational.

The invention provides (automated) methods to stop a domain name at registration time (as part of the registration process) and/or perform extra checks (e.g. based on (automatically) requested information).

The invention exploits the insight that long-running campaigns are responsible for a large majority of the malicious domain registrations.

The invented (automated) methods are based on so-called supervised learning mechanisms that can predict malicious domain registrations, at registration time. The invention provides particular instantiations of such supervised learning mechanisms, in particular adapted based on the long-running campaign insight mentioned above. A similarity-based predictor is provided. In a second further embodiment a reputation-based predictor is provided. Particular combinations of those are also possible, more especially provides how different combinations of the two predictors can balance between false positives and false negatives, depending on the operational context.

The invention builds on a profound study of the ecosystem of malicious domain registrations used to better understand how malicious actors operate to get hold of a large corpus of short-lived domain names. In particular embodiments of the invention exploits explicitly that a large majority of the domain abuse can be attributed to a small set of malicious actors. Moreover the methods take into account the evidence that the malicious domain registration process is only partially automated: syndicates work along office hours and make human errors while registering domains. Note that about 18.41% of domains are not flagged as malicious by blacklisting services, while these domains can clearly be linked to other malicious domains. Either not all domains registered with malicious intent are being abused, or a significant fraction of malicious activity is not picked up by blacklisting services.

Insights in the malicious domain registration process can strongly contribute to reduce the number of malicious domains by preventing domain registrations in the first place, or to limit the impact of the malicious activity by increasing the coverage on blacklisting services. In essence the invention hence also provides methods for enhancing domain name blacklisting services.

The invented methods are based on associating domains via registrant details and demonstrate that such approach significantly improves the identification of domains registered with malicious intent. This in the methods been exploited to prevent malicious domain registrations in the first place, or to increase the coverage of blacklisting services.

### BRIEF DESCRIPTION OF THE DRAWINGS

With specific reference now to the figures, it is stressed that the particulars shown are by way of example and for purposes of illustrative discussion of the different embodiments of the present invention only. They are presented in the cause of providing what is believed to be the most useful and readily description of the principles and conceptual aspects of the invention. In this regard no attempt is made to show structural details of the invention in more detail than is necessary for a fundamental understanding of the invention. The description taken with the drawings making apparent to those skilled in the art how the several forms of the invention may be embodied in practice.

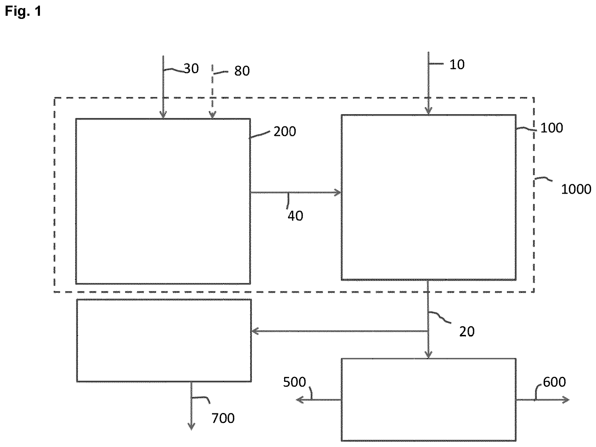

**Fig. 1****: Schematic flowchart of the current invention**

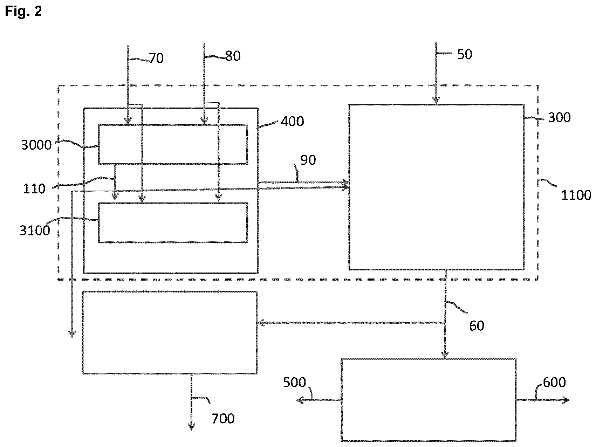

**Fig. 2****: Schematic flowchart of the current invention**

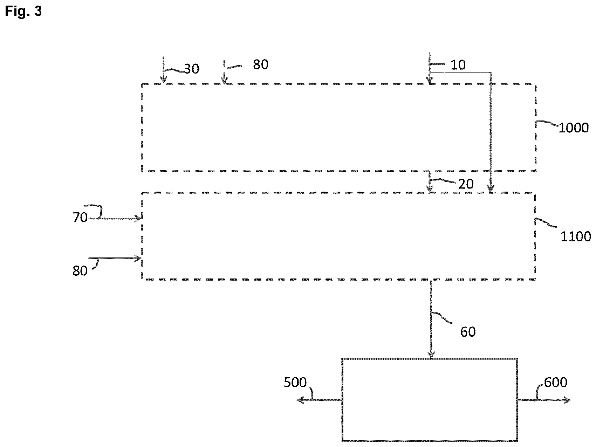

**Fig. 3****: Schematic flowchart of the current invention**

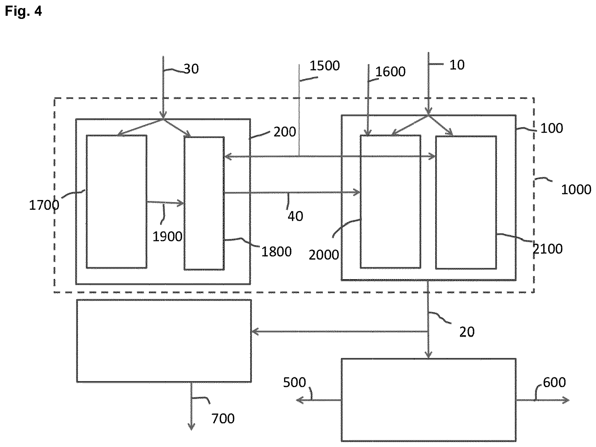

**Fig. 4****: Schematic flowchart of the current invention**

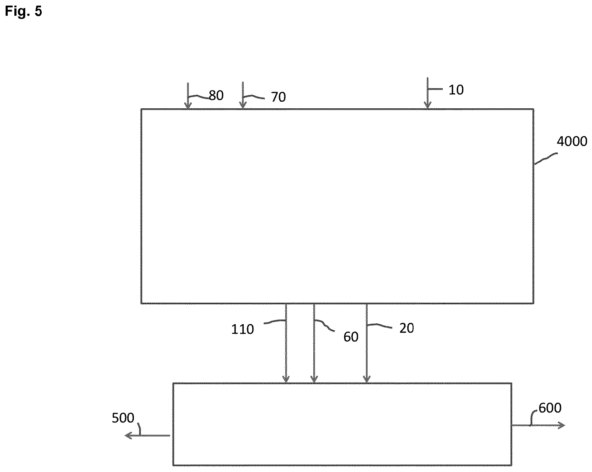

**Fig. 5****: Schematic flowchart of the current invention**

### DETAILED DESCRIPTION OF THE INVENTION

The Domain Name System is one of the most visible technologies of the Internet, and users are putting direct trust in domain names while using Internet services. Malicious actors are constantly trying to abuse this trust, and are taking advantage of domain names to quickly locate and relocate their malicious activities around the globe. In particular, a continuous arms race is taking place between blacklisting services, and attackers that apply a fast-paced hit-and-run strategy (e.g. by using series of short-lived domains).

The invention provides solutions to predict malicious behavior of (services operating behind) domain names, at the time they are being registered and hence before they become operational/do harm.

The invention is based on and validated on real-world data that has been gathered while monitoring 14 months of domain registrations. This dataset consists of 824,121 new domain registrations; 2.5% have been flagged as malicious by blacklisting services. A manual retroactive analysis identified that 79.64% of these maliciously-flagged registrations can be attributed to 20 long-running campaigns.

The invention provides methods suitable for a registry to successfully predict a large fraction of malicious registrations, already at registration time. In the various embodiments online supervised learning techniques are employed that can be tailored with respect to precision and recall, depending on the operational needs and costs (e.g. the cost to handle false positives or false negatives).

By using an aggressive predictor, 74.70% of the malicious registrations can be predicted, at the cost of a false-positive rate of 1.84%. In another embodiment wherein the more conservative predictor is used, one is able to predict 56.93% of the malicious registrations with a very low false positive rate of 0.29%.

In summary the invented predictors offer clear improvements on and complement existing abuse indicators, by monitoring or blocking malicious domain names before they can be misused to do actual harm.

Exemplary embodiments are now further described:
Recall that our aim is to develop techniques to automatically predict, at registration time, whether a domain name will be used for malicious purposes. Two complementary strategies have been identified and developed in order to enable the classification of new domain name registrations as being benign or malicious. The first strategy aims to automatically cluster previous registrations into pseudo-campaigns by mainly focusing on similarities between malicious registrations' details. Similar malicious domain names are grouped into clusters and afterwards, new registrations can be predicted to have been registered as part of an existing malicious cluster. The second strategy is based on calculating reputation scores of registrants, registrars, email providers and name servers. These scores form the input to a binary classifier that learns to associate reputations with maliciousness. Considering the fact that these two strategies focus on different criteria, one can combine the outcomes of these complementary models to improve the performance of our predictions. Both approaches are designed to operate as online learners, by training and generating new prediction models on a daily basis. This ensures continuous adaptation to the changing strategies of intelligent attackers, contributing to a robust detection system.

### CLUSTERING

As discussed before we reported that 79.64 of malicious registrations are part of larger and longer-running campaigns. The patterns and characteristics observed during this post-factum analysis reveal opportunities for automated and early campaign discovery. We propose a design that uses machine learning to fully autonomously cluster malicious registrations into pseudo-campaigns. We do not attempt to exactly recreate the campaigns identified but instead we leverage the perceived similarities that these malicious registrations share to form clusters. These clusters are then used to predict whether new instances are associated with ongoing malicious activity.

The proposed system operates on a daily basis in three phases. All registrations from the training time window prior to the current testing date are gathered. (A) First, all benign registrations from the training set are filtered out using the blacklists. As a result, only registrations known to be malicious on the prediction date form the input of the clustering algorithm. (B) In this clustering algorithm, similar malicious registrations will be grouped together with the aim of representing pseudo-campaigns. The goal is to obtain a small set of dense clusters of associated malicious registrations during a given time window. The actual prediction is performed during the last phase: (C) the distance metric that is used by the clustering algorithm is applied to evaluate the similarity of new registrations to all of the previously established malicious clusters. When the distance is smaller than a certain threshold, the new registration is predicted to have been registered as part of the corresponding cluster.

In order to group blacklisted registrations together into clusters, we have to be able to evaluate the similarity between two instances. To that extent, we use a metric that expresses the distance between two registrations, with a focus on assessing campaign associations. Once this distance metric is in place, we can compute the distance matrix of a set of malicious registrations that serves as the input for a clustering algorithm. When we revisit the features used to characterize campaigns, we find that most distinctive patterns are present in the registrant's contact details. Presumably, these artefacts are caused by automated registration tools used by malicious actors. For instance, if a registrar imposes specific formatting rules for an address field, patterns and repeated values might emerge while the tool attempts to adhere to the registrar's policy. Inspired by this insight, we include the distances between different fields of the registrant's contact details (e.g. address, phone number, etc.) as components of our distance metric. Naturally, these are string features that cannot be compared using a geometric function, nor is it desirable to compare them in a binary fashion as slightly different strings might share similar substrings or patterns. Therefore, we make use of the Levenshtein edit distance to assess their similarity. This distance between two strings is defined as the minimum number of single-character adjustments (insertions, deletions or substitutions) that are needed to transform one string into the other. The distance function thus preserves a notion of partial similarity and common characters in both strings. Since some registrations contain longer strings than others, we normalize each pairwise distance to the longest string to allow for proper comparison of different distances. A downside of the Levenshtein distance, is that it is computationally expensive. However, if many registrations contain the same string values, the performance can be significantly enhanced through caching techniques.

Apart from string differences in contact details, we also include categorical features. In our distance metric, we use them to represent the distance between email providers, registrar, name servers and their geographical location. Categorical features are characterized by a limited set of possible values.

For these features we define the distance in a binary fashion, 0 when two registrations' categorical feature have the same value and 1 when it differs. In some more complex scenario's, where arrays of values are used (e.g. name servers), we either set the distance to 0 if a minimum of one value matches with at least one other value from the other registration's array. Alternatively, we calculate the distance as the fraction of values that is shared between the two instances.

The last two features, the domain name's length and randomness score, are numeric. Here, we calculate the euclidian distance between values of the different registrations. To account for differences in range and variations, both numeric features are first standardized across the entire dataset of malicious registrations before their distance is calculated.

We calculate the total distance between two registrations by taking the weighted sum of the pairwise distance of each feature. Furthermore, each feature value pair requires a specific calculation according to the underlying data objects, as described above. Furthermore, we give a weight to certain features to influence their significance in the aggregated sum. The weights have been chosen, based an evaluation during the validation phase.

Once we have established the distance metric between registrations, we compute the pairwise distance between all malicious registrations. From all pairwise registration distances, we construct a distance matrix, that serves as the input for the clustering algorithm.

As we use a custom distance metric, agglomerative Clustering is an appropriate choice given its ability to work with any pairwise distances. Agglomerative clustering belongs to the family of hierarchical clustering algorithms and works by iteratively merging two clusters that are the closest to each other. In order to merge the most similar clusters, the algorithm must be able to determine the distance between clusters. For this purpose, we adopt the complete linkage criterion. Using this criterion, the distance between two clusters is equal to that of the most dissimilar instances of both clusters, promoting a high intra-cluster similarity.

The output of the agglomerative clustering algorithm cannot be used without further processing. By default, the algorithm will continue to iteratively merge clusters until only one large cluster remains which encompasses all malicious registrations. Therefore, a crucial point of the clustering phase is to determine an appropriate stopping criterion. As we do not know the number of active pseudo-campaigns at this point, we cannot configure the merging process to stop at a predefined number of clusters. Therefore, we establish a distance threshold at which further merging should be avoided to prevent polluting the clusters with non-related instances. We refer to this distance limit as the Maximum Merging Distance (MMD). An appropriate MMD is determined through the evaluation of cluster homogeneity by using the data set and by empirical analysis on the validation set.

Once we have established the malicious clusters of the past time window, we can predict whether new incoming registrations are part of them. To that extent, we use the same distance metric and clustering linkage criterion that were applied in the clustering algorithm. The distance between the new registration and each cluster is measured. The new registration can be regarded as a new cluster with a single instance. Thus, if the registration is closer to an existing cluster than the MMD, it is predicted as being part of that cluster and classified as malicious.

During prediction, we can limit the comparison of new registrations to the most sizeable clusters. This promotes focus on the largest pseudo-campaigns and might positively impact false-positive predictions. We configure this through a parameter that specifies the percentage of malicious registrations that should be covered by the biggest clusters.

As registries process thousands of new registrations every day, a system that aims to send out a warning at registration time should be able to produce a result very rapidly. Since measuring the distance between a new registration and a cluster involves expensive pairwise calculations with each instance in that cluster, this quickly becomes an long-running operation. To improve efficiency, we take advantage of the characteristics of complete linkage to avoid redundant calculations. More specifically, the distance from a new registration to a cluster is given by the greatest distance between that registration and any of the cluster's instances. Furthermore, the distance threshold that determines whether a registration is part of that cluster or not, is predefined. This allows to stop determining the distance between a new registration and a cluster, as soon as we encounter an instance of that cluster that is farther away from the new registration than the threshold. At that point, we are certain that the distance to that cluster is at least greater that the threshold and the algorithm can continue with the next cluster.

### REPUTATION

Above a similarity-based approach to predicting maliciousness of domain registrations was proposed and developed. Intuitively, this approach matches the concept of malicious domain registrations that are registered as part of campaigns. This clustering technique makes solely use of malicious training data. Integrating another classification technique which also incorporates benign training data may thus bring additional knowledge to the overall prediction system. The combination of both approaches can therefore further increase the prediction performance in an ensemble learning setup.

For the reputation-based prediction, a set of input attributes was chosen, comparable to the one used by the similarity-based prediction. However, the non-categorical string attributes, such as the registrant address were dropped. Instead, 'reputation scores' were added for the registrant, registrar, e-mail provider, name-servers configured for a registered domain name.

The reputation scores were calculated over 4 different periods: 14 days, 30 days, 60 days and since the start of monitoring the blacklists, resulting in 16 new (albeit derived) classification attributes. The reputation scores are calculated as the percentage of registrations linked to a particular registrant, registrar, e-mail provider or nameserver, which were labelled as malicious in the ground truth data. In order to ensure that only knowledge available at the time of registration is used during classification, these reputation scores are calculated daily.

In a first example the algorithm uses the training data to iteratively build an ordered list of if-then rules as prediction model by constructing partial decision trees in each iteration and using the 'best' leaf of the tree as a new rule. The resulting model is an ordered list of rules, combining inequalities with registration attributes by means of multiple AND-clauses.

In a second example the algorithm iteratively generates simple uncombined inequalities, known as 'decision stumps' and uses the resulting prediction error to create better subsequent decision stumps. The result is a weighted list of 10 stumps per model, predicting the domain registration.

Both classifiers have the additional advantage of producing models which are human readable and interpretable.

## Claims

1. A method for automatic determining at time of registration whether a new domain name registration is likely to be intended for use for malicious activity or not, comprising the steps of:
performing a method for automatic determining of the parameters of ar automated method for automatic determining at time of registration whether a domain name registration is likely to be intended for use for malicious activity or not and this solely based on registrant information, more preferably registrant contact information, of malicious domain name registrations, said method for automatic determining of the parameters comprising: (i) loading for a plurality of malicious domain name registrations ,the corresponding registrant information, more preferably registrant contact information; (ii) determining (200) via machine learning the parameters (40) of said automated method to determine with high likelihood whether a domain name registration is likely to be intended for use for malicious activity or not; and
thereafter performing the steps of:
(i) loading registrant information, more preferably registrant contact information, of said new domain name registration ; (ii) verifying (100), by use of said automated method, based on said parameters, said machine learned verification being solely based on said registrant infromation of said new domain name registration, the similarity of said domain name registration with said plurality of malicious domain name registrations, (iii) indicating (20) based thereon that said domain name registration is likely to be intended for use for malicious activity.

2. The method of claim 1, wherein the determining the parameters via machine learning comprises computing (1700) a distance metric (1900) between registrations, said distance metric, in particular said distance metric being a sum of components related to the distance in the various fields of registrant contact information.

3. The method of claim 1 or 2, wherein the verifying comprises computing (2000) a distance metric between said new domain name registration sand a pre-clustered set of the plurality of maliciou domain name registrations, in particular said distance metric being a sum of components related to the distance in the various fields of registrant contact information; and said indicating being based on comparing (2100) said distance with an inputted threshold .

4. The method of claim 1, wherein the machine learning discovers long-running registration campaigns.

5. The method of claim 4, wherein the machine learning is based on a clustering method, designed to cluster long-running registration campaigns.

6. The method of claim 5, wherein the clustering comprises computing (1700) a distance metric (1900) between registrations, said distance metric, in particular said distance metric being a sum of components related to the distance in the various fields of registrant contact information.

7. The method of claim 3 in combination with claim 5, comprising (i) inputting a first threshold parameter (1500) and (ii) clustering (1800) said loaded domain name registrations till said threshold is reached to thereby use a distance threshold at which merging of clusters in the method of clustering is stopped

8. A method for registering a domain name by a registrar and/or registry or enhancing domain name blacklisting services, comprising: use of the method of any of the claims 1 to 7 in combination with of a second method for automatic determining at time of registration whether a new domain name registration is likely to be intended for use for malicious activity or not, said second method comprising the steps of:
(i) loading for a plurality of both known malicious and benign domain name registrations the corresponding domain registration info (70) and information related to their malicious and benign use (80);
(ii) determining (3000) reputation scores (110) from the corresponding domain registration info (70) and information related to their malicious and benign use (80), (iii) determining (3100), based on the corresponding domain registration info (70), and information related to their malicious and benign use (80) and reputation scores (110), via machine learning the parameters (90) of a second automated method to determine with high likelihood whether a domain name registration is likely to be intended for use for malicious activity or not, and thereafter performing the steps of:
(i) using said second automated method to determine a reputation score of said new domain name registration and
(ii) indicating (60) based thereon that said new domain name registration is likely to be intended for use for malicious activity, or, if determined therewith that the likelihood of use for malicious activity is low, automatic registering (500) of said domain name by the registrar and/or registry , or, if determined therewith that the likelihood of use for malicious activity is high, automatic providing (700) said domain name to said blacklisting services.

9. The method of claim 8, wherein said indicating is based on a classifier.

10. The method of claim 8 or 9, wherein the method (1000) of claims 1 to 3 is used before said second method for automatic determining at time of registration whether a domain name registration is likely to be intended for use for malicious activity or not.

## Patentansprüche

1. Verfahren zum automatischen Bestimmen zum Zeitpunkt der Registrierung, ob die Registrierung eines neuen Domänennamens wahrscheinlich zur Verwendung für böswillige Aktivitäten bestimmt ist oder nicht, umfassend die Schritte:
Durchführen eines Verfahrens zum automatischen Bestimmen der Parameter eines automatisierten Verfahrens zum automatischen Bestimmen zum Zeitpunkt der Registrierung, ob eine Domänennamenregistrierung wahrscheinlich zur Verwendung für böswillige Aktivitäten bestimmt ist oder nicht, und dies ausschließlich basierend auf Registranteninformationen, bevorzugter Registrantenkontaktinformationen von böswilligen Domänennamenregistrierungen, wobei das Verfahren zum automatischen Bestimmen der Parameter Folgendes umfasst: (i) Laden der entsprechenden Registranteninformationen, bevorzugter Registrantenkontaktinformationen, für eine Vielzahl von böswilligen Domänennamenregistrierungen; (ii) Bestimmen (200) der Parameter (40) des automatisierten Verfahrens durch maschinelles Lernen, um mit hoher Wahrscheinlichkeit zu bestimmen, ob eine Domänennamenregistrierung wahrscheinlich zur Verwendung für böswillige Aktivitäten bestimmt ist oder nicht; und
danach Ausführen der folgenden Schritte:
(i) Laden von Registranteninformationen, bevorzugter von Registrantenkontaktinformationen, der neuen Domänennamenregistrierung; (ii) Verifizieren (100), unter Verwendung des automatisierten Verfahrens, basierend auf den Parametern, wobei die maschinell erlernte Verifizierung ausschließlich auf den Registranteninformationen der neuen Domänennamenregistrierung basiert, der Ähnlichkeit der Domänennamenregistrierung mit der Vielzahl von Böswilligen Registrierungen von Domänennamen, (iii) Angabe (20) darauf basierend, dass die Registrierung von Domänennamen wahrscheinlich zur Verwendung für böswillige Aktivitäten bestimmt ist.

2. Verfahren nach Anspruch 1, wobei das Bestimmen der Parameter durch maschinelles Lernen das Berechnen (1700) einer Entfernungsmetrik (1900) zwischen Registrierungen umfasst, wobei die Entfernungsmetrik, insbesondere die Entfernungsmetrik, eine Summe von Komponenten ist, die sich auf die Entfernung in den verschiedenen Feldern beziehen der Kontaktinformationen des Registranten.

3. Verfahren nach Anspruch 1 oder 2, wobei das Verifizieren das Berechnen (2000) einer Entfernungsmetrik zwischen der neuen Domänenregistrierung und einem vorgeclusterten Satz der Vielzahl bösartiger Domänennamenregistrierungen umfasst, wobei die Entfernungsmetrik insbesondere eine Summe verwandter Komponenten ist auf die Entfernung in den verschiedenen Feldern der Kontaktinformationen des Registranten; und wobei das Anzeigen auf dem Vergleichen (2100) des Abstands mit einem eingegebenen Schwellenwert basiert.

4. Verfahren nach Anspruch 1, wobei das maschinelle Lernen lang andauernde Registrierungskampagnen entdeckt.

5. Verfahren nach Anspruch 4, wobei das maschinelle Lernen auf einem Clustering-Verfahren basiert, das dafür ausgelegt ist, lang andauernde Registrierungskampagnen zu clustern.

6. Verfahren nach Anspruch 5, wobei das Gruppieren das Berechnen ( 1700 ) einer Entfernungsmetrik ( 1900 ) zwischen Registrierungen umfasst, wobei die Entfernungsmetrik, insbesondere die Entfernungsmetrik, eine Summe von Komponenten ist, die sich auf die Entfernung in den verschiedenen Feldern des Registrantenkontakts beziehen Information.

7. Verfahren nach Anspruch 3 in Kombination mit Anspruch 5, umfassend (i) Eingeben eines ersten Schwellenwertparameters (1500) und (ii) Gruppieren (1800) der geladenen Domänennamenregistrierungen, bis der Schwellenwert erreicht ist, um dadurch einen Entfernungsschwellenwert zu verwenden, bei dem Zusammenführen von Clustern im Clustering-Verfahren wird gestoppt.

8. Verfahren zum Registrieren eines Domänennamens durch einen Registrar und/oder eine Registrierungsstelle oder zum Verbessern von Diensten zum Sperren von Domänennamen, umfassend: Verwendung des Verfahrens nach einem der Ansprüche 1 bis 7 in Kombination mit Verwendung eines zweiten Verfahrens zum automatischen Bestimmen zum Zeitpunkt der Registrierung ob eine neue Domänennamenregistrierung wahrscheinlich zur Verwendung für böswillige Aktivitäten bestimmt ist oder nicht, wobei das zweite Verfahren die folgenden Schritte umfasst: (i) Laden der entsprechenden Domänenregistrierungsinformationen für eine Vielzahl sowohl bekannter bösartiger als auch gutartiger Domänennamenregistrierungen (70 ) und Informationen zu ihrer böswilligen und harmlosen Verwendung (80); (ii) Bestimmen (3000) von Reputationswerten (110) aus den entsprechenden Domänenregistrierungsinformationen (70) und Informationen bezüglich ihrer böswilligen und gutartigen Verwendung (80), (iii) Bestimmen (3100) basierend auf den entsprechenden Domänenregistrierungsinformationen ( 70) und Informationen in Bezug auf ihre böswillige und gutartige Verwendung (80) und Reputationswerte (110), über maschinelles Lernen die Parameter (90) eines zweiten automatisierten Verfahrens, um mit hoher Wahrscheinlichkeit zu bestimmen, ob eine Domänennamenregistrierung wahrscheinlich beabsichtigt ist zur Verwendung für böswillige Aktivitäten oder nicht, und danach Durchführen der Schritte: Verwenden des zweiten automatisierten Verfahrens zum Bestimmen einer Reputationspunktzahl der neuen Domänennamenregistrierung: und (ii) Anzeigen (60) darauf basierend, dass die neue Domänennamenregistrierung wahrscheinlich ist zur Verwendung für böswillige Aktivitäten bestimmt sein, oder, wenn damit bestimmt wird, dass die Wahrscheinlichkeit der Verwendung für böswillige Aktivitäten gering ist, automatisches Registrieren (500) des Domain-Namens durch den Registrar und/oder die Registry, oder, wenn d damit festgestellt wird, dass die Wahrscheinlichkeit der Verwendung für böswillige Aktivitäten hoch ist, automatisches Bereitstellen (700) des Domänennamens für die Blacklisting-Dienste.

9. Verfahren nach Anspruch 8, wobei das Anzeigen auf einem Klassifizierer basiert.

10. Verfahren nach Anspruch 8 oder 9, wobei das Verfahren (1000) der Ansprüche 1 bis 3 vor dem zweiten Verfahren verwendet wird, um zum Zeitpunkt der Registrierung automatisch zu bestimmen, ob eine Domänennamenregistrierung wahrscheinlich zur Verwendung für böswillige Aktivitäten bestimmt ist oder nicht.

## Revendications

1. Procédé pour déterminer automatiquement au moment de l'enregistrement si un nouvel enregistrement de nom de domaine est susceptible d'être destiné à être utilisé pour une activité malveillante ou non, comprenant les étapes consistant à :
mise en oeuvre d'un procédé de détermination automatique des paramètres d'un procédé automatisé pour déterminer automatiquement au moment de l'enregistrement si un enregistrement de nom de domaine est susceptible d'être utilisé pour une activité malveillante ou non et ceci uniquement sur la base des informations du titulaire, plus préférablement des informations de contact du titulaire , d'enregistrements de noms de domaine malveillants, ledit procédé de détermination automatique des paramètres comprenant : (i) le chargement, pour une pluralité d'enregistrements de noms de domaine malveillants, des informations de titulaire correspondantes, plus préférablement des informations de contact du titulaire ; (ii) déterminer (200) par apprentissage automatique les paramètres (40) dudit procédé automatisé pour déterminer avec une probabilité élevée si un enregistrement de nom de domaine est susceptible d'être destiné à être utilisé pour une activité malveillante ou non ; et
effectuer ensuite les étapes de :
(i) charger les informations du titulaire, plus préférablement les informations de contact du titulaire, dudit nouvel enregistrement de nom de domaine ; (ii) vérifier (100), à l'aide dudit procédé automatisé, sur la base desdits paramètres, ladite vérification apprise par machine étant uniquement basée sur lesdites informations de titulaire dudit nouvel enregistrement de nom de domaine, la similarité dudit enregistrement de nom de domaine avec ladite pluralité d'éléments malveillants enregistrements de nom de domaine, (iii) indiquant (20) sur cette base que ledit enregistrement de nom de domaine est susceptible d'être destiné à être utilisé pour une activité malveillante.

2. Procédé selon la revendication 1, dans lequel la détermination des paramètres par apprentissage automatique comprend le calcul (1700) d'une métrique de distance (1900) entre les enregistrements, ladite métrique de distance, en particulier ladite métrique de distance étant une somme de composants liés à la distance dans les divers champs des coordonnées du titulaire.

3. Procédé selon la revendication 1 ou 2, dans lequel la vérification comprend le calcul (2000) d'une métrique de distance entre ledit nouvel enregistrement de domaine et un ensemble pré-groupé de la pluralité d'enregistrements de noms de domaine malveillants, en particulier ladite métrique de distance étant une somme de composants liés à la distance dans les différents champs de coordonnées du titulaire ; et ladite indication étant basée sur la comparaison (2100) de ladite distance avec un seuil entré.

4. Procédé selon la revendication 1, dans lequel l'apprentissage automatique découvre des campagnes d'inscription de longue durée.

5. Procédé selon la revendication 4, dans lequel l'apprentissage automatique est basé sur un procédé de regroupement, conçu pour regrouper des campagnes d'inscription de longue durée.

6. Procédé selon la revendication 5, dans lequel le regroupement comprend le calcul (1700) d'une métrique de distance (1900) entre les enregistrements, ladite métrique de distance, en particulier ladite métrique de distance étant une somme de composants liés à la distance dans les divers champs d'informations de contact du titulaire.

7. Procédé selon la revendication 3 en combinaison avec la revendication 5, comprenant (i) l'entrée d'un premier paramètre de seuil (1500) et (ii) le regroupement (1800) desdits enregistrements de noms de domaine chargés jusqu'à ce que ledit seuil soit atteint pour ainsi utiliser un seuil de distance auquel la fusion des clusters dans la méthode de clustering est arrêté.

8. Procédé d'enregistrement d'un nom de domaine par un bureau d'enregistrement et/ou un registre ou amélioration des services de liste noire de noms de domaine, comprenant : l'utilisation du procédé selon l'une quelconque des revendications 1 à 7 en combinaison avec l'utilisation d'un second procédé pour déterminer automatiquement au moment de l'enregistrement si un nouvel enregistrement de nom de domaine est susceptible d'être utilisé pour une activité malveillante ou non, ledit deuxième procédé comprenant les étapes consistant à : (i) charger pour une pluralité d'enregistrements de noms de domaine à la fois malveillants et bénins connus les informations d'enregistrement de domaine correspondantes (70 ) et des informations relatives à leur utilisation malveillante et bénigne (80); (ii) déterminer (3000) des scores de réputation (110) à partir des informations d'enregistrement de domaine correspondantes (70) et des informations liées à leur utilisation malveillante et bénigne (80), (iii) déterminer (3100), sur la base des informations d'enregistrement de domaine correspondantes ( 70), et des informations relatives à leur utilisation malveillante et bénigne (80) et des scores de réputation (110), via l'apprentissage automatique des paramètres (90) d'un deuxième procédé automatisé pour déterminer avec une forte probabilité si un enregistrement de nom de domaine est susceptible d'être prévu à utiliser pour une activité malveillante ou non, et ensuite effectuer les étapes consistant à : utiliser ledit second procédé automatisé pour déterminer un score de réputation dudit nouvel enregistrement de nom de domaine : et (ii) indiquer (60) sur cette base que ledit nouvel enregistrement de nom de domaine est susceptible être destiné à être utilisé pour une activité malveillante, ou, s'il est déterminé avec cela que la probabilité d'utilisation pour une activité malveillante est faible, l'enregistrement automatique (500) dudit nom de domaine par le bureau d'enregistrement et/ou le registre, ou, si d étant déterminé avec cela que la probabilité d'utilisation pour une activité malveillante est élevée, fourniture automatique (700) dudit nom de domaine auxdits services de mise sur liste noire.

9. Procédé selon la revendication 8, dans lequel ladite indication est basée sur un classificateur.

10. Procédé selon la revendication 8 ou 9, dans lequel le procédé (1000) des revendications 1 à 3 est utilisé avant ledit deuxième procédé pour déterminer automatiquement au moment de l'enregistrement si un enregistrement de nom de domaine est susceptible d'être destiné à être utilisé pour une activité malveillante ou non.
